# EUROPEAN PATENT APPLICATION

(11) **EP 4 835 966 A1**
(43) Date of publication of application: **04.11.2026**
(21) Application number: 25861259.7
(22) Date of filing: 25.08.2025
(51) Int. Cl.: H01M 4/04, G01C 11/00, G01K 13/04, H05B 6/06

(54) **ELECTRODE ROLLING APPARATUS AND ELECTRODE ROLLING METHOD**

(30) Priority: 26.08.2024 KR 20240114674
(71) Applicant: LG Energy Solution, Ltd., Seoul 07335 (KR)
(72) Inventor: LIM, Hee Young, Daejeon 34122 (KR); JANG, Yeong Cheol, Daejeon 34122 (KR); SHIN, Sung Jong, Daejeon 34122 (KR); KIM, Jeong Hui, Daejeon 34122 (KR); EOM, Do Geon, Daejeon 34122 (KR)
(74) Representative: Plasseraud IP
(86) International application number: PCT/KR2025/012897
(87) International publication number: WO 2026/049441

(57) **Abstract**

The present invention controls a heating position of an induction heating part by reflecting a positional change of an uncoated portion of an electrode sheet or a moving speed of the electrode sheet, thereby providing an electrode rolling device and an electrode rolling method, capable of uniformly heating the entire region of the uncoated portion and minimizing a section where the uncoated portion does not receive heat.

## Description

### Technical Field

The present invention relates to an electrode rolling device and an electrode rolling method.

This application claims the benefit of priority from Korean Patent Application No. 10-2024-0114674 dated August 26, 2024, the entire disclosure of which is incorporated herein by reference.

### Background Art

As application fields for secondary batteries expand, demand for higher capacity secondary batteries rapidly increases. As a method of increasing the capacity of the secondary battery, research on a technology to increase loading amounts of electrode active materials has been conducted. However, when the loading amount of the electrode active material is increased, the volume of the electrode increases. In this instance, to reduce the volume of the electrode, a process of rolling the electrode at a higher pressure is required.

Typically, the rolling process of rolling electrodes pressurizes and rolls an electrode sheet having a coated portion coated with a positive or negative electrode active material and an uncoated portion coated with no active material using a rolling roller.

During such a rolling process, the pressure is applied to the coated portion due to the difference in thickness between the coated and uncoated portions, whereas almost no pressure is applied to the uncoated portion. In this instance, a camber phenomenon, in which the electrode sheet bends due to a stretching degree difference between the uncoated and coated portions, often occurred, and to solve this issue, heat was conventionally applied to the uncoated portion prior to rolling.

Meanwhile, when the heat is applied to the uncoated portion, an induction heating device is used. The induction heating device converts electrical energy into thermal energy through electromagnetic induction, which is typically configured in the form of a box with a built-in coil.

Such an induction heating device adjusts electrical output to set a desired temperature value, thereby applying heat to the uncoated portion, whereby it may be stretched.

However, the location of the uncoated portion can vary depending on the electrode sheet, and the composition or material of the electrode active material, and when the induction heating device heats the uncoated portion at the initially set location, there is a problem that a portion without receiving any heat occurs in the uncoated portion. Furthermore, when the moving speed of the electrode sheet changes, such as when the equipment stops and starts, there is a problem that a portion without receiving any heat occurs in the uncoated portion, and accordingly, this causes a problem that electrode disconnection occurs.

### Disclosure

### Technical Problem

It is a technical problem to be solved by the present invention to provide an electrode rolling device and an electrode rolling method, capable of controlling a heating position of an induction heating part by reflecting a positional change of an uncoated portion or a moving speed of an electrode sheet.

Furthermore, it is a technical problem to be solved by the present invention to provide an electrode rolling device and an electrode rolling method, capable of minimizing a section where an uncoated portion does not receive heat through position control of an induction heating part.

### Technical Solution

To solve the problems, an electrode rolling device related to one example of the present invention is an electrode rolling device comprising a rolling part for rolling an electrode sheet including an uncoated portion uncoated with an electrode slurry and a coated portion coated with an electrode slurry. The electrode rolling device may comprise a moving part for moving the electrode sheet to the rolling part, a detection part for detecting the position of the uncoated portion in the electrode sheet during moving toward the rolling part, and an induction heating part arranged to be movable in a moving direction of the electrode sheet and inductively heating the uncoated portion. The induction heating part may be arranged to be movable along the moving direction of the electrode sheet and a width direction of the electrode sheet. Furthermore, in the induction heating part, a moving speed according to the moving direction of the electrode sheet may be adjusted based on the moving speed of the electrode sheet.

According to one example of the present invention, an electrode rolling device comprising a rolling part for rolling an electrode sheet including an uncoated portion uncoated with an electrode slurry and a coated portion coated with an electrode slurry is provided, in which the electrode rolling device comprises a moving part for moving the electrode sheet to the rolling part, a detection part for detecting the position of the uncoated portion in the electrode sheet during moving toward the rolling part, an induction heating part arranged to be movable in a moving direction of the electrode sheet and inductively heating the uncoated portion, and a control part for controlling movement of the induction heating part so that the induction heating part is positioned at the detected position of the uncoated portion.

Also, in the electrode rolling device, the control part may control the movement of the induction heating part based on a moving speed of the electrode sheet.

Furthermore, in the electrode rolling device, the control part may comprise a first mode that when the moving speed of the electrode sheet is a preset standard moving speed, the movement of the induction heating part is controlled to heat the uncoated portion at a fixed position; and a second mode that when the moving speed of the electrode sheet is higher than or equal to the preset standard moving speed, the movement of the induction heating part is controlled to inductively heat the uncoated portion while moving at a predetermined speed in the same direction as the moving direction of the electrode sheet.

In addition, the electrode rolling device may comprise a temperature measuring part for measuring a temperature of the uncoated portion.

Also, in the electrode rolling device, the control part may control a temperature of the induction heating part based on the measured temperature of the uncoated portion.

Furthermore, in the electrode rolling device, the temperature measuring part may be connected to the detection part to move integrally.

In addition, the electrode rolling device may comprises: an upper moving rail positioned at the top of the electrode sheet, and including a first vertical moving rail extending in a first direction along the moving direction of the electrode sheet, and a first horizontal moving rail extending in a second direction along the width direction of the electrode sheet; and a lower moving rail positioned at the bottom of the electrode sheet, and including a second vertical moving rail extending in a first direction along the moving direction of the electrode sheet, and a second horizontal moving rail extending in a second direction along the width direction of the electrode sheet, wherein the detection part may be connected to the upper moving rail to move, and the induction heating part may be connected to the lower moving rail to move.

Also, in the electrode rolling device, the induction heating part may comprise a coil box with a built-in induction coil; and a power supply part for supplying power so that the induction coil is heated, and the control part may control movement of the coil box so that the induction coil aligns with a preset alignment line along the length direction of the electrode sheet between one side of the uncoated portion adjacent to the coated portion and the other side opposite the one side.

According to another example of the present invention, an electrode rolling method using an electrode rolling device comprising a rolling part for rolling an electrode sheet including an uncoated portion uncoated with an electrode slurry and a coated portion coated with an electrode slurry is provided. The electrode rolling method comprises a moving step of moving the electrode sheet to the rolling part, a detection step of detecting a position of the uncoated portion in the electrode sheet during moving to the rolling part, an induction heating step, which is arranged to be movable in a moving direction of the electrode sheet and inductively heats the uncoated portion, and a control step of controlling movement of an induction heating part so that the induction heating part is positioned at the detected position of the uncoated portion.

Also, in the electrode rolling method, the control step may control the movement of the induction heating part based on a moving speed of the electrode sheet.

Furthermore, in the electrode rolling method, the control step may comprise a first mode step that when the moving speed of the electrode sheet is a preset standard moving speed, the movement of the induction heating part is controlled to heat the uncoated portion at a fixed position; and a second mode step that when the moving speed of the electrode sheet is higher than or equal to the preset standard moving speed or higher than the standard speed, the movement of the induction heating part is controlled to inductively heat the uncoated portion while moving at a predetermined speed in the same direction as the moving direction of the electrode sheet.

In addition, the electrode rolling method may comprise a temperature measuring step of measuring a temperature of the uncoated portion.

Furthermore, in the electrode rolling method, the control step may control a temperature of the induction heating part based on the temperature of the uncoated portion measured in the temperature measuring step.

### Advantageous Effects

As discussed above, the electrode rolling device and electrode rolling method according to one example of the present invention have the following effects.

The heating position of the induction heating part can be adjusted by reflecting the positional change of the uncoated portion in the electrode sheet or the moving speed of the electrode sheet, and accordingly, the section where the uncoated portion does not receive heat can be minimized.

### Description of Drawings

Figure 1 is a diagram showing an electrode sheet moving toward a rolling part.
Figure 2 is a diagram showing an electrode rolling device according to one example of the present invention.
Figure 3 is a side view of an electrode rolling device according to one example of the present invention.
Figure 4 is a diagram showing an induction heating part according to one example of the present invention.
Figure 5 is a block configuration diagram showing a configuration associated with a control part of the present invention.
Figure 6 is a diagram for explaining movement of an induction heating part upon a first mode.
Figure 7 is a diagram for explaining movement of an induction heating part upon a second mode.
Figure 8 is a schematic diagram showing an upper moving rail and a lower moving rail.

### Mode for Invention

Hereinafter, an electrode rolling device and an electrode rolling method according to one example of the present invention will be described in detail with reference to the attached drawings.

In addition, regardless of the reference numerals, the same or corresponding components are given by the same or similar reference numerals, duplicate descriptions thereof will be omitted, and for convenience of explanation, the size and shape of each component member as shown can be exaggerated or reduced.

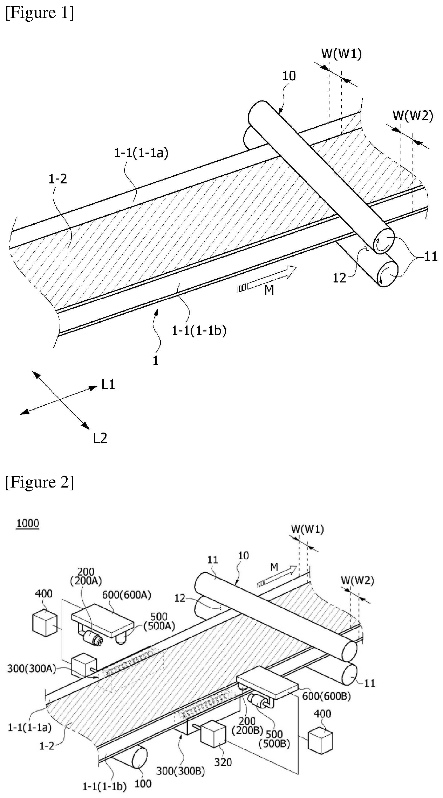

Figure 1 is a diagram showing an electrode sheet moving toward a rolling part.

Referring to Figure 1, one example of the present invention relates to an electrode rolling device comprising a rolling part (10) for rolling an electrode sheet (1) including an uncoated portion (1-1) uncoated with an electrode slurry and a coated portion (1-2) coated with an electrode slurry.

The electrode slurry may comprise a positive electrode active material or a negative electrode active material. The electrode slurry containing the positive electrode active material may be a positive electrode slurry, and the electrode sheet (1) comprising the coated portion (1-2) coated with the positive electrode slurry may be a positive electrode sheet. Furthermore, the electrode slurry containing the negative electrode active material may be a negative electrode slurry, and the electrode sheet (1) comprising the coated portion (1-2) coated with the negative electrode slurry may be a negative electrode sheet.

As the positive electrode active material or the negative electrode active material, various known compositions may be used without limitation, and the electrode slurry may further comprise a conductive agent, a binder, a plasticizer, a solvent, and the like, the types of which are not particularly limited.

The electrode sheet (1) may be manufactured by applying electrode slurry to a specific region on an electrode current collector having a predetermined width and a predetermined length.

For example, the electrode sheet (1) may comprise a first region coated with an electrode slurry along the length direction (L1) in the central portion of the electrode current collector, and a second region excluding the first region, and the second region may be a region uncoated with the electrode slurry along the length direction of the electrode current collector at both edges along the width direction (L2) of the electrode current collector, where the first region may be a coated portion (1-2), and the second region may be a uncoated portion (1-1).

The rolling part (10) comprises two rolling rollers (11) heated to a high temperature, where a rolling gap (12) is formed between the pair of rolling rollers (11), and the electrode sheet (1) is rolled while passing through the rolling gap (12), and a pressure and the rolling gap (12) are adjusted by the rolling rollers (11), whereby it is possible to provide an electrode sheet (1) having the desired thickness and active material capacity density.

Typically, in the coated portion (1-2) and the uncoated portion (1-1) of the electrode sheet (1), a stretching degree deviation between the coated portion (1-2) and the uncoated portion (1-1) occurs due to the thickness difference, and to minimize such a stretching degree deviation, a heating process of heating the uncoated portion (1-1) is required prior to rolling.

The electrode rolling device related to one example of the present invention is arranged to control the heating position of the induction heating part (300) by reflecting the positional change of the uncoated portion (1-1) or the moving speed of the electrode sheet (1) during the heating process through components to be described below, and accordingly, has an advantage capable of minimizing the section where the uncoated portion (1-1) of the electrode sheet (1) does not receive heat.

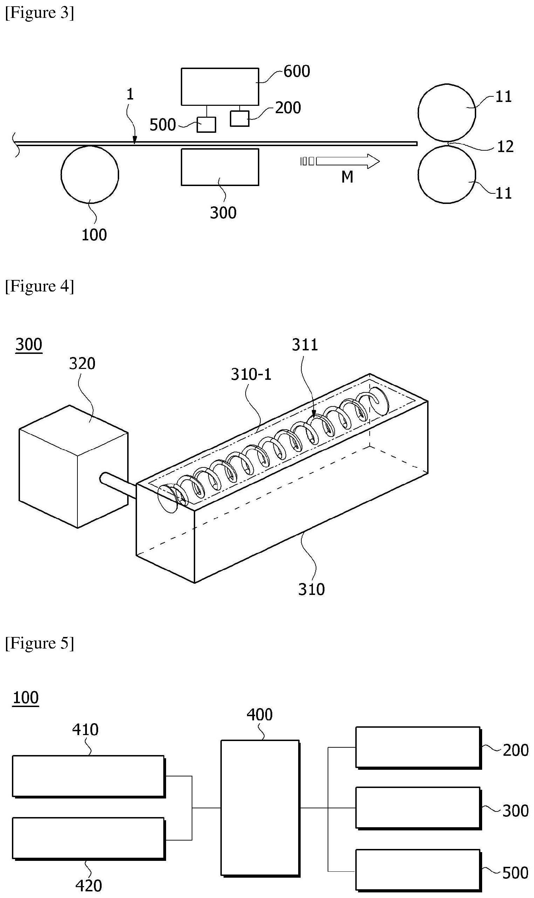

Figure 2 is a diagram showing an electrode rolling device (1000) according to one example of the present invention, Figure 3 is a side view of an electrode rolling device according to one example of the present invention, Figure 4 is a diagram showing an induction heating part according to one example of the present invention, and Figure 5 is a block configuration diagram showing a configuration associated with a control part of the present invention.

Specifically, the electrode rolling device (1000) related to one example of the present invention comprises a moving part (100), a detection part (200), an induction heating part (300), and a control part (400). Furthermore, the electrode rolling device (1000) may comprise a rolling part (10), a moving part (100), a detection part (200), an induction heating part (300), and a control part (400).

The moving part (100) moves the electrode sheet (1) to the rolling part (10). The moving part (100) may connect the rolling part (10) to a coating part (not shown) for coating an electrode slurry on an electrode current collector, and the moving part (100) may comprise a plurality of transfer rollers disposed between the coating part and a connection part. The coating part may comprise a coating device for applying an electrode slurry.

The detection part (200) detects the position of the uncoated portion (1-1) of the electrode sheet (1) during moving to the rolling part (10). The detection part (200) may comprise, for example, a camera capable of detecting the position of the uncoated portion (1-1). The camera may be arranged to detect the width (W) of the uncoated portion (1-1). As one example, the control part (400) may extract the coated portion and the uncoated portion from the image information of the electrode sheet (1) input through the camera, and may be arranged to calculate the width of the uncoated portion.

Depending on the material of the electrode current collector or the composition of the electrode slurry, the width (W) of the uncoated portion (1-1) may vary under the same coating conditions, and the position of the uncoated portion (1-1) may also vary as the electrode sheet (1) deviates from the transfer path (meandering occurrence) during transfer. Furthermore, the detection part (200) serves to detect such a position or width (W) change of the uncoated portion (1-1), which may contribute to providing an accurate heating position for an induction heating part (300) to be described below.

The induction heating part (300) may be arranged to be movable, and may inductively heat the uncoated portion (1-1). The induction heating part (300) may be arranged to be movable in the moving direction (M) of the electrode sheet. The induction heating part (300) may convert electrical energy into thermal energy through electromagnetic induction, and may heat the uncoated portion (1-1) with the converted thermal energy.

Furthermore, the induction heating part (300) may comprise a coil (311) converting electrical energy into thermal energy. The induction heating part (300) may determine a heatable heating region (310-1) depending on the size or position of the induction coil (311). The heating region (310-1) may be arranged on one surface of the coil box (310) facing the uncoated portion (1-1), which is described below. The heating region (310-1) may be positioned in contact with or adjacent to the uncoated portion (1-1) to inductively heat the uncoated portion (1-1).

The control part (400) controls the movement of the induction heating part (300) so that the induction heating part (300) is positioned at the detected position of the uncoated portion (1-1). Even if the position of the uncoated portion (1-1) on the electrode sheet (1) changes due to various factors, the control part (400) aligns the heating region (310-1) of the induction heating part (300) to coincide with a preset alignment line to be described below, whereby it is possible to minimize the section where the uncoated portion (1-1) does not receive heat.

The detection part (200) may comprise a first detection part (200A) for detecting a first uncoated portion (1-1a) having a predetermined first width (W1) at one side edge of the electrode sheet (1), and a second detection part (200B) for detecting a second uncoated portion (1-1b) having a predetermined second width (W2) at the other side edge of the electrode sheet (1). As one example, the detection part may comprise one or more cameras.

Furthermore, the induction heating part (300) may comprise a first induction heating part (300A) for inductively heating a first uncoated portion (1-1a) having a predetermined first width (W1) at one side edge of the electrode sheet (1), and a second induction heating part (300B) for inductively heating a second uncoated portion (1-1b) having a predetermined second width (W2) at the other aide edge of the electrode sheet (1).

The first detection part (200A) and the first induction heating part (300A) may be linked to each other to perform position detection of the first uncoated portion (1-1a) and induction heating based on the detected position, and the second detection part (200B) and the second induction heating part (300B) may be linked to each other to perform position detection of the second uncoated portion (1-1b) and induction heating based on the detected position.

In one example, the control part (400) may control the movement of the induction heating part (300) based on the moving speed of the electrode sheet (1). Even if the moving speed of the electrode sheet (1) changes, the control part (400) may control the movement of the induction heating part (300) to minimize the section where the unheated portion (1-1) does not receive heat by reflecting the same, and by minimizing the section where the unheated portion (1-1) does not receive heat, it is possible to reduce a disconnection occurrence frequency or damage due to disconnection.

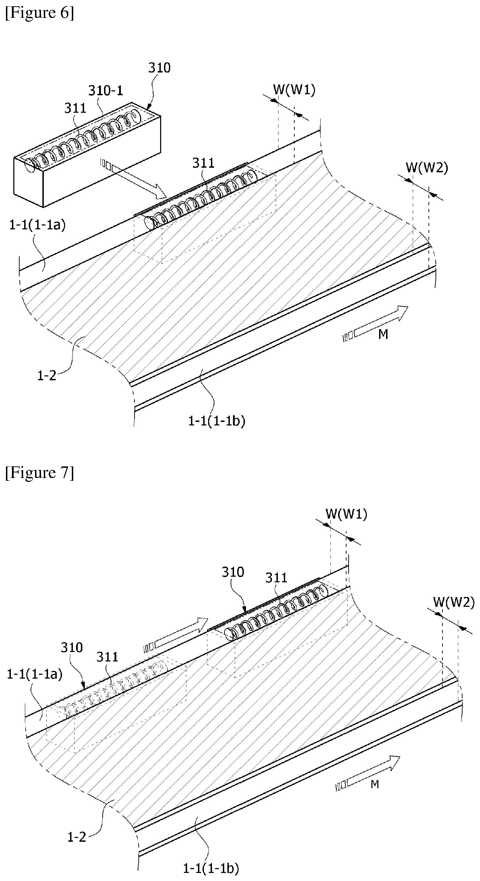

Figure 6 is a diagram for explaining movement of an induction heating part upon a first mode, and Figure 7 is a diagram for explaining movement of an induction heating part upon a second mode.

Specifically, the control part (400) may comprise a first mode (410) that when the moving speed of the electrode sheet (1) is a preset standard moving speed, the movement of the induction heating part (300) is controlled to heat the uncoated portion (1-1) at a fixed position, and a second mode (420) that when the moving speed of the electrode sheet (1) is higher than or equal to the preset standard moving speed, the movement of the induction heating part (300) is controlled to inductively heat the uncoated portion (1-1) while moving at a predetermined speed in the same direction as the moving direction (M) of the electrode sheet (1). In this way, the uncoated portion (1-1) can be effectively heated by moving the induction heating part (300) in a transfer direction of the electrode sheet (1) depending on a change in a transfer speed of the electrode sheet (1). Furthermore, the moving speed of the induction heating part (300) may also vary according to the change in the transfer speed of the electrode sheet (1).

Referring to Figure 6, in the first mode (410), the control part (400) may fix the movement of the induction heating part (300) so that the heating region (310-1) of the induction heating part (300) does not deviate from a state where it is located inside the width (W) of the uncoated portion (1-1) detected by the detection part (200). That is, the position of the induction heating part (300) can be fixed, and the induction heating part (300) can perform a heating operation at the fixed position.

Meanwhile, in the case where the moving speed of the electrode sheet (1) is higher than or equal to the preset standard moving speed, if the position of the induction heating part (300) is fixed to heat the uncoated portion (1-1) at the fixed position as in the first mode (410), a section where the uncoated portion (1-1) does not receive heat may occur.

An electrode rolling device (1000) related to one example of the present invention can minimize the section where the uncoated portion (1-1) does not receive heat through a second mode (420) in which the induction heating part (300) moves at a predetermined speed in the same direction as the moving direction (M) of the electrode sheet (1), when the moving speed of the electrode sheet (1) becomes relatively faster than the standard moving speed.

Referring to Figure 7, upon the second mode (420), the induction heating part (300) may first move to the detected position of the uncoated portion (1-1), and then move at a predetermined speed in the same direction as the moving direction (M) of the electrode sheet (1). Upon the second mode (420), the induction heating part (300) may move in the same direction as the moving direction (M) of the electrode sheet (1) in a state where the heating region (310-1) thereof is positioned inside the width (W) of the uncoated portion (1-1).

Furthermore, in addition to the first and second modes (410, 420), the present invention may comprise a third mode that when the moving speed of the electrode sheet (1) is less than or equal to the preset standard moving speed, the movement of the induction heating part (300) is controlled to inductively heat the uncoated portion (1-1) while moving at a predetermined speed in the direction opposite to the moving direction (M) of the electrode sheet (1).

Typically, in electrode rolling devices, an "acceleration section" where the moving speed of the electrode sheet is higher than or equal to a preset standard moving speed, a "deceleration section" where the moving speed of the electrode sheet is less than or equal to a preset standard moving speed, and a "restart section" after stopping can occur due to various factors. If the uncoated portion (1-1) is heated under setting conditions at the preset standard moving speed conditions in the sections where the preset standard moving speed differs, there can be situations in which the uncoated portion (1-1) does not receive heat or receives excessive heat than necessary, which can ultimately cause disconnection occurrence and production losses due to the disconnection occurrence.

The electrode rolling device according to the present invention selects one of the first to third modes for sections where the moving speed of the electrode sheet varies to control the movement of the induction heating part (300), whereby it can allow the uncoated portion (1-1) to receive adequate heat, and thus it is possible to minimize disconnection occurrence and production losses due to the disconnection occurrence.

An electrode rolling device (1000) according to one example of the present invention may comprise a temperature measuring part (500) for measuring the temperature of the uncoated portion (1-1). The temperature measuring part (500) may comprise a temperature sensor for measuring the surface temperature of the uncoated portion (1-1). As one example, the temperature sensor may be a non-contact sensor. The temperature measuring part (500) may be arranged to be movable. The temperature measuring part (500) may comprise a first temperature measuring part (500A) for measuring a temperature of a first uncoated portion (1-1a) having a predetermined first width (W1) at one side edge of the electrode sheet (1), and a second temperature measuring part (500B) for measuring a temperature of a second uncoated portion (1-1b) having a predetermined second width (W2) at the other side edge of the electrode sheet (1).

For example, the first detection part (200A), the first temperature measuring part (500A), and the first induction heating part (300A) may be linked to each other to perform position detection, temperature measurement, and induction heating of the first uncoated portion (1-1a), respectively, and the second detection part (200B), the second temperature measuring part (500B), and the second induction heating part (300B) may be linked to each other to perform position detection and induction heating of the second uncoated portion (1-1b), respectively.

The control part (400) may control the movement of the temperature measuring part (500) so that the temperature measuring part (500) is positioned at the detected position of the uncoated portion (1-1). The control part (400) controls the movement of the temperature measuring part (500) so that the temperature measuring part (500) is positioned at the position of the uncoated portion (1-1) detected as above, whereby the accurate temperature measurement of the uncoated portion (1-1) can be allowed, even if the width (W) of the uncoated portion (1-1) varies depending on changes in the material of the electrode current collector or the composition of the electrode slurry, or if the position of the uncoated portion (1-1) also varies as meandering occurs due to deviation of the electrode sheet (1) from the moving path during movement.

The control part (400) may control the temperature of the induction heating part (300) based on the measured temperature of the uncoated portion (1-1). When the temperature of the uncoated portion (1-1) is lower or higher than the target temperature, the control part (400) may control the temperature of the induction heating part (300) to match the temperature of the uncoated portion (1-1) to the target temperature. The target temperature may mean, for example, a temperature that the stretching degree difference between the coated portion (1-2) and the non-stick portion (1-1) is minimized.

The temperature measuring part (500) may be connected to the detection part (200) to move integrally. For example, the temperature measuring part (500) and the detection part (200) may be connected to a movable stage part (600). As the temperature measuring part (500) is connected to the detection part (200) to move integrally, it is possible to reduce the used loss upon controlling the movement of the temperature measuring part (500) and the detection part (200), respectively.

The movable stage part (600) may comprise, for example, a first movable stage part (600A) to which the first detection part (200A) and the first temperature measuring part (500A) are connected, and a second movable stage part (600B) to which the second detection part (200B) and the second temperature measuring part (500B) are connected.

As one example, the induction heating part (300) may be positioned at the bottom of the electrode sheet (1), and the detection part (200) may be positioned at the top of the electrode sheet (1). Furthermore, the temperature measuring part (500) may be positioned at the top of the electrode sheet (1) and, as described above, may be integrally connected to the detection part (200).

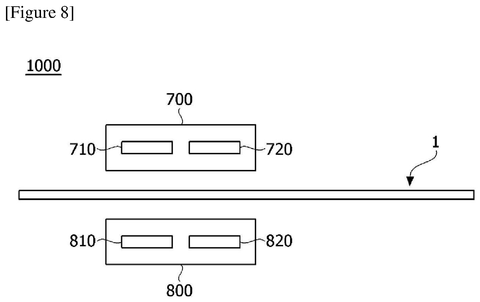

Figure 8 is a schematic diagram showing an upper moving rail and a lower moving rail.

Referring to Figure 8, the electrode rolling device (1000) according to one example of the present invention may comprise an upper moving rail (700) and a lower moving rail (800).

Referring to Figures 1, 2, and 8, the upper moving rail (700) may be positioned at the top of the electrode sheet (1), and comprise a first vertical moving rail (710) extending in a first direction (L1) along the moving direction (M) of the electrode sheet (1), and a first horizontal moving rail (720) extending in a second direction (L2) along the width direction of the electrode sheet (1).

Furthermore, the lower moving rail (800) may be positioned at the bottom of the electrode sheet (1), and comprise a second vertical moving rail (810) extending in a first direction (L1) along the moving direction (M) of the electrode sheet (1), and a second horizontal moving rail (820) extending in a second direction (L2) along the width direction of the electrode sheet (1).

As one example, the detection part (200) may be connected to the upper moving rail (700) to move, and the induction heating part (300) may be connected to the lower moving rail (800) to move.

Furthermore, the temperature measuring part (500) is connected to the detection part (200), whereby the detection part (200) and the temperature measuring part (500) may move together along the upper moving rail (700). For example, the movable stage part (600) connecting the temperature measuring part (500) and the detection part (200) may be connected to the upper moving rail (700) to move.

In the present invention, the moving direction (M) of the electrode sheet (1) and the first direction may be the same direction, and the width direction of the electrode sheet and the second direction may be the same direction.

According to the foregoing, the detection part (200), the induction heating part (300), and the temperature measuring part (500) according to the present invention may be arranged to be movable in the first and second directions (or the moving direction and width direction of the electrode sheet).

In one specific example, the induction heating part (300) may comprise a coil box (310) with a built-in induction coil (311), and a power supply part (320) for supplying power to heat the induction coil (311). Furthermore, the control part (400) may control the movement of the coil box (310) so that the induction coil (311) is aligned with a preset alignment line along the length direction of the electrode sheet (1) between one side of the uncoated portion (1-1) adjacent to the coated portion (1-2) and the other side opposite the one side.

One side of the uncoated portion (1-1) may mean, for example, a boundary region between the coated portion (1-2) and the uncoated portion (1-1), and the other side of the uncoated portion (1-1) may mean both edges along the width direction of the electrode sheet (1).

For example, the alignment line may be set at one side of the uncoated portion (1-1), i.e., the boundary region between the coated portion (1-2) and the uncoated portion (1-1).

As one example, the alignment of the induction coil (311) may be performed by manual alignment or automatic alignment, and the induction coil (311) may be automatically aligned by controlling the movement of the coil box (310) through the control part (400), or the induction coil (311) may be manually aligned as a worker directly moves the coil box (310) directly operates a switch controlling the movement of the coil box (310).

The control part (400) may control the movement of the coil box (310) so that the heating region (310-1) heated by the induction coil (311) is positioned inside the width (W) of the uncoated portion (1-1) having a predetermined width (W).

More specifically, the coil box (310) may have one surface facing the uncoated portion (1-1), and at least a partial region of the one surface may include a heating region (310-1) heated by the induction coil (311). The control part (400) may control, for example, the movement of the coil box (310) so that the heating region (310-1) is positioned inside the width (W) of the uncoated portion (1-1).

The control part (400) can minimize the section where the uncoated portion (1-1) does not receive heat by controlling the movement of the coil box (310) so that the induction coil (311) is positioned inside the width (W) of the uncoated portion (1-1). Furthermore, the control part (400) can control the heating temperature of the induction coil (311) to heat the uncoated portion (1-1) to a desired temperature by controlling a power supply of the power supply part (320).

One example of the present invention relates to an electrode rolling method. The electrode rolling method is a method of using the above-described electrode rolling device, and hereinafter, detailed descriptions overlapping with the above-described contents will be omitted.

Specifically, the electrode rolling method may utilize an electrode rolling device (1000) comprising a rolling part (10) for rolling an electrode sheet (1) including an uncoated portion (1-1) uncoated with an electrode slurry and a coated portion (1-2) coated with an electrode slurry.

The electrode rolling method may comprise a moving step of moving the electrode sheet (1) to the rolling part (10), a detection step of detecting a position of the uncoated portion (1-1) in the electrode sheet (1) during moving to the rolling part (10), an induction heating step, which is arranged to be movable in a moving direction of the electrode sheet and inductively heats the uncoated portion (1-1), and a control step of controlling movement of an induction heating part (300) so that the induction heating part (300) is positioned at the detected position of the uncoated portion (1-1).

The electrode rolling method can minimize the section where the uncoated portion (1-1) does not receive heat by reflecting positional changes of the uncoated portion (1-1) or the moving speed of the electrode sheet (1) to control the heating position of the induction heating part (300).

In one example, the control step may control the movement of the induction heating part (300) based on a moving speed of the electrode sheet (1).

Specifically, the control step may comprise a first mode step that when the moving speed of the electrode sheet (1) is a preset standard moving speed, the movement of the induction heating part (300) is controlled to heat the uncoated portion (1-1) at a fixed position; and a second mode step that when the moving speed of the electrode sheet (1) is higher than or equal to the preset standard moving speed or higher than the standard speed, the movement of the induction heating part (300) is controlled to inductively heat the uncoated portion (1-1) while moving at a predetermined speed in the same direction as the moving direction (M) of the electrode sheet (1).

In another example, the method may comprise a temperature measuring step of measuring a temperature of the uncoated portion (1-1).

The control step may control a temperature of the induction heating part (300) based on the temperature of the uncoated portion (1-1) measured in the temperature measuring step.

The preferred examples of the present invention as described above have been disclosed for illustrative purposes, and those skilled in the art having ordinary knowledge of the present invention will be able to make various modifications, changes, and additions within the spirit and scope of the present invention, and such modifications, changes, and additions should be regarded as falling within the scope of the following claims.

### Industrial Applicability

In accordance with the electrode rolling device and the electrode rolling method according to one example of the present invention, it is possible to adjust the heating position of the induction heating part by reflecting positional changes of the uncoated portion in the electrode sheet or the moving speed of the electrode sheet.

## Claims

1. An electrode rolling device comprising a rolling part for rolling an electrode sheet including an uncoated portion uncoated with an electrode slurry and a coated portion coated with an electrode slurry, wherein the electrode rolling device comprises:
a moving part for moving the electrode sheet to the rolling part;
a detection part for detecting the position of the uncoated portion in the electrode sheet during moving toward the rolling part;
an induction heating part arranged to be movable in a moving direction of the electrode sheet and inductively heating the uncoated portion; and
a control part for controlling movement of the induction heating part so that the induction heating part is positioned at the detected position of the uncoated portion.

2. The electrode rolling device according to claim 1, wherein the control part controls the movement of the induction heating part based on a moving speed of the electrode sheet.

3. The electrode rolling device according to claim 2, wherein the control part comprises:
a first mode that when the moving speed of the electrode sheet is a preset standard moving speed, the movement of the induction heating part is controlled to heat the uncoated portion at a fixed position; and
a second mode that when the moving speed of the electrode sheet is higher than or equal to the preset standard moving speed, the movement of the induction heating part is controlled to inductively heat the uncoated portion while moving at a predetermined speed in the same direction as the moving direction of the electrode sheet.

4. The electrode rolling device according to claim 1, further comprising a temperature measuring part for measuring a temperature of the uncoated portion.

5. The electrode rolling device according to claim 4, wherein the control part controls a temperature of the induction heating part based on the measured temperature of the uncoated portion.

6. The electrode rolling device according to claim 4, wherein the temperature measuring part is connected to the detection part to move integrally.

7. The electrode rolling device according to claim 1, comprising: an upper moving rail positioned at the top of the electrode sheet, and including a first vertical moving rail extending in a first direction along the moving direction of the electrode sheet, and a first horizontal moving rail extending in a second direction along the width direction of the electrode sheet; and
a lower moving rail positioned at the bottom of the electrode sheet, and including a second vertical moving rail extending in a first direction along the moving direction of the electrode sheet, and a second horizontal moving rail extending in a second direction along the width direction of the electrode sheet, wherein
the detection part is connected to the upper moving rail to move, and
the induction heating part is connected to the lower moving rail to move.

8. The electrode rolling device according to claim 1, wherein the induction heating part comprises a coil box with a built-in induction coil; and a power supply part for supplying power so that the induction coil is heated, and
the control part controls movement of the coil box so that the induction coil aligns with a preset alignment line along the length direction of the electrode sheet between one side of the uncoated portion adjacent to the coated portion and the other side opposite the one side.

9. An electrode rolling method using an electrode rolling device comprising a rolling part for rolling an electrode sheet including an uncoated portion uncoated with an electrode slurry and a coated portion coated with an electrode slurry, wherein the electrode rolling method comprises:
a moving step of moving the electrode sheet to the rolling part;
a detection step of detecting a position of the uncoated portion in the electrode sheet during moving to the rolling part;
an induction heating step, which is arranged to be movable in a moving direction of the electrode sheet and inductively heats the uncoated portion; and
a control step of controlling movement of an induction heating part so that the induction heating part is positioned at the detected position of the uncoated portion.

10. The electrode rolling method according to claim 9, wherein the control step controls the movement of the induction heating part based on a moving speed of the electrode sheet.

11. The electrode rolling method according to claim 10, wherein the control step comprises:
a first mode step that when the moving speed of the electrode sheet is a preset standard moving speed, the movement of the induction heating part is controlled to heat the uncoated portion at a fixed position; and
a second mode step that when the moving speed of the electrode sheet is higher than or equal to the preset standard moving speed, the movement of the induction heating part is controlled to inductively heat the uncoated portion while moving at a predetermined speed in the same direction as the moving direction of the electrode sheet.

12. The electrode rolling method according to claim 9, comprising a temperature measuring step of measuring a temperature of the uncoated portion.

13. The electrode rolling method according to claim 12, wherein the control step controls a temperature of the induction heating part based on the temperature of the uncoated portion measured in the temperature measuring step.
